(19) Europäisches Patentamt
European Patent Office
Office européen des brevets

(11) EP 4 650 394 A1

(12) **EUROPEAN PATENT APPLICATION**

(43) Date of publication:
**19.11.2025 Bulletin 2025/47**

(21) Application number: **24175743.4**

(22) Date of filing: **14.05.2024**

(51) International Patent Classification (IPC):
***C08K 3/34*** *(2006.01)* ***C08K 3/38*** *(2006.01)*
***C08K 5/523*** *(2006.01)* ***C08K 3/22*** *(2006.01)*
***C08L 27/06*** *(2006.01)* ***B65G 15/00*** *(2006.01)*

(52) Cooperative Patent Classification (CPC):
(C-Sets available)
**B65G 15/38; B29D 29/00; B29D 29/06;** C08J 5/04; C08K 3/016; C08K 2003/2227; C08K 2003/387; C08K 2201/019 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **HABASIT ITALIANA S.P.A.**
**20090 Cesano Boscone (Milano) (IT)**

(72) Inventors:
- **Vespa, Federico**
  **13876 Sandigliano (IT)**
- **De Pietra, Francesca**
  **13835 Valdilana (IT)**

(74) Representative: **Bohest AG**
**Holbeinstrasse 36-38**
**4051 Basel (CH)**

(54) **PVC PLASTISOLS CONTAINING HYDRATED FLAME RETARDANTS AND ZEOLITES FOR CONVEYOR BELTS**

(57) Disclosed is a flame retardant PVC plastisol comprising a) a PVC, b) a plasticizer for the PVC, c) a particulate hydrated magnesium silicate, particulate $Al(OH)_3$ and/or particulate hydrated zinc borate, preferably in a total amount of 40 to 60 parts by weight per 100 parts by weight of the PVC; and d) a particulate dehydrated zeolite. The PVC plastisol can be used to form coating layers for conveyor or power transmission belts or for impregnating textile layers in conveyor or power transmission belts.

**Fig. 1**

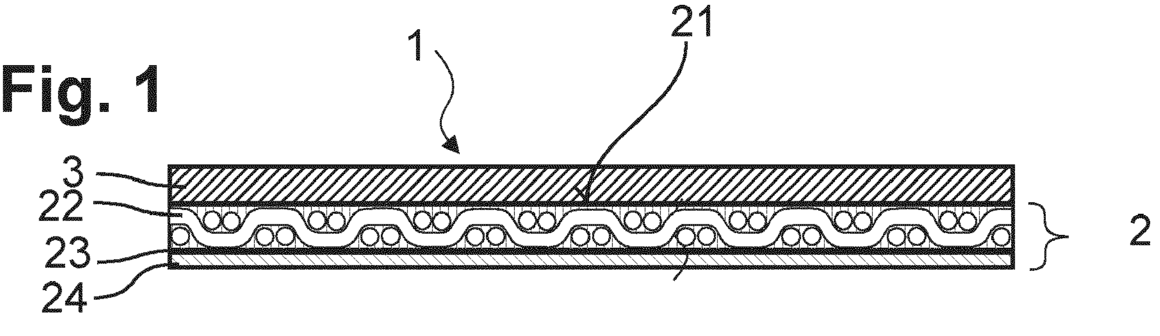


EP 4 650 394 A1

(52) Cooperative Patent Classification (CPC): (Cont.)

C-Sets
**C08K 3/22, C08L 27/06;**
**C08K 3/34, C08L 27/06;**
**C08K 3/346, C08L 27/06;**
**C08K 3/38, C08L 27/06;**
**C08K 5/523, C08L 27/06**

## Description

Flame retardancy is a desirable property for many conveyor belt types. Finished conveyor belts with a PVC cover layer are customarily considered flame-retardant because of the non-flammable property of the PVC itself. As "flame retardant" is customarily understood a material exhibiting a "limiting oxygen index" (LOI), as may be determined by ISO 4589 or ASTM D2863, of greater than 20 vol%, which is the volumetric oxygen concentration in the atmosphere. Such a material will tend to self-extinguish when burning in atmospheric air. Flame retardancy may be imparted to polymers such as PVC using hydrated anorganics such as $Al(OH)_3$ and hydrated borate salts (in particular zinc borates).

The flammability of PVC conveyor belts may however arise during their manufacture, when the PVC is applied as a plastisol containing a flammable plasticizer such as liquid phthalic acid esters. By way of example JP 2010/037679 A prepared in Example 2 and Comparative Example 2 a conveyor belt by knife-coating a PVC plastisol onto a polylactic/PET core/sheath base fabric or onto a pure PET base fabric, respectively, and gelling at 60°C for 60 minutes. However this publication did not include any flame retardant agent at all.

A very commonly used flame retardant for PVC has been antimony trioxide, $Sb_2O_3$. Its flame retardant effect arises during combustion of its mixture with the PVC which generates volatile fumes of antimony chloride and antimony oxychloride. Their volatilization can absorb heat, and the gas produced can isolate oxygen and dilute combustibles. However $Sb_2O_3$ is becoming increasingly undesirable in view of the toxicity of antimony itself and of the said antimony-containing fumes.

In some instances unspecified clay minerals have been added as fillers or reinforcing agents to non-PVC conveyor belt layers or to PVC-containing conveyor belt layers. Reference is made by way of example to CN 107501638 A and CN 106939093 A. The former publication achieves flame retardancy by adding one or more flame retardants selected from decabromo biphenyl, chlorinated paraffin, antimony trioxide, zinc borate, aluminium hydroxide, and magnesium hydroxide.

PVC blends containing sepiolites as such has been occasionally studied. The sepiolites were used as fillers to affect mechanical, morphological, thermal or optical properties of the blends. However the PVC blends were not made from plastisols; the mixing of PVC and sepiolites was done in PVC solution, typically with THF as the solvent. Reference is made e.g. to AIP Conference Proceedings vol.2626(1), Article No. 040015 (2023) (https://doi.org/10.1063/5.0136124).

A thesis by Martina De Pietra entitled "Valutazione della sepiolite nell'additivazione antifiamma del plastisol di PVC" (University of Turin, 2021) studies PVC plastisols containing $Al(OH)_3$ and optionally sepiolites (silicone or silane surface-modified) and/or optionally hydrated zinc borate. Such plastisols with a Shore A hardness of about 70 were considered appropriate in view of designing a technical tissue or a conveyor belt ("nastro transportatore"). However when the plastisols were gelled/solidified in an oven formation of large bubbles was observed, which was considered an undesirable result in view of application in a conveyor belt.

The adsorption of gaseous $N_2$, $O_2$ and $CO_2$ with zeolites of 4Å pore size as such has been known, see e.g. Energy & Fuels 17, pp. 571-576 (2003). There is however no publication known to the applicant that discloses an influence of zeolites on the formation of the Harvey nuclei needed for gas bubble formation. Most of the commercial advertisement of molecular sieves for "bubble prevention" relates to polyurethane synthesis, where the purported "bubble prevention" is actually an absorption of water from the diisocyanate by the zeolite to prevent isocyanate hydrolysis and thus formation of carbon dioxide gas bubbles. In any case it appears that for successful gas absorption the zeolites need to be dehydrated (activated), otherwise hydration moisture will block the zeolite cavities needed for gas absorption.

The present invention seeks a PVC plastisol that is flame retardant and is suitable for preparing PVC layers in conveyor belts.

SUMMARY OF THE INVENTION

The invention thus provides a PVC plastisol comprising

a) a PVC,
b) a plasticizer for the PVC,
c) a particulate hydrated magnesium silicate, particulate $Al(OH)_3$ and/or particulate hydrated zinc borate, preferably in a total amount of 40 to 60 parts by weight per 100 parts by weight of the PVC;

characterized in that it furthermore comprises d) a particulate dehydrated zeolite.

Preferred respective embodiments are according to the respective dependent claims.

BRIEF DESCRIPTION OF THE FIGURES

Fig.1 is a cross-sectional view through a conveyor belt with a top coating made from a plastisol according to the invention;

Fig.2 is a cross-sectional view through a PVG belt according to the invention; and

Fig.3 is a cross-sectional view through a conveyor belt with two traction layers containing a woven fabric and being impregnated with a PVC plastisol according to the invention.

Fig.4 shows pictures of a PVC plastisol coating without (a)) and with (b)) particulate zeolite (molecular sieve).

In Figs. 1-3 all diagonal bold hatchings running at 45° from bottom left to top right indicate PVC layers or impregnations made from an inventive plastisol.

DETAILED DESCRIPTION OF THE INVENTION

It was unexpectedly found that the co-use of a *hydrated* magnesium silicate, of the optional $Al(OH)_3$ (which is a *hydrated* $Al_2O_3$), of the optional *hydrated* zinc borate and, on the other hand, of a *dehydrated* zeolite in one and the same PVC plastisol does not impair the respective properties of the components, in particular, that the hydrated magnesium silicate, the $Al(OH)_3$ and the hydrated zinc borate do not impair the activity of the dehydrated zeolite.

The term "PVC", as understood in the present application, encompasses homopolymerisates of vinyl chloride and copolymerisates of vinyl chloride with up to 10 mol%, preferably 2 to 6 mol%, based on the vinyl chloride, of other chlorine-devoid olefinic monomers, being preferably selected from the group of vinyl acetate, acrylonitrile, acrylamide, acrolein and ($C_{1-10}$, preferably $C_{1-4}$, straight-chain or branched alkyl)acrylates; with vinylacetate as sole co-monomer being particularly preferred.

The elemental composition (mass ratio of chlorine to carbon, $r_{Cl-C}$) of a PVC as understood herein may alternatively be described by the formula

$$r_{Cl-C} = \frac{35.45(1-x)}{24.02}$$

wherein x is a dimensionless number in the range of 0 to 0.08 or 0.01 to 0.08, preferably of 0.01 to 0.06.

The PVC's suitable for the invention may be either an emulsion grade (= paste grade) PVC, a suspension-polymerized PVC or a bulk-polymerized PVC. The emulsion grade (= paste grade) and suspension-polymerized types are preferred; most preferred is the emulsion grade (= paste grade).

The Fikentscher K-value of PVC's suitable for the invention is typically in the range of 60 to 85, preferably of 60 to 75.

In the inventive plastisol a flame retardant selected from the group consisting of hydrated magnesium silicates, $Al(OH)_3$ and hydrated zinc borates. These flame retardants are typically used in a total amount of 40-60 phr, preferably 45-55 phr. The term "hydrated", as understood in the context of the hydrated magnesium silicates and hydrated zinc borates, encompasses any such compound formally obtainable by addition of water to magnesium metasilicate ($MgSiO_2$, enstatite), to magnesium orthosilicate ($Mg_2SiO_4$, forsterite) and to any mixtures of these two, or formally obtainable by addition of water to zinc borate, respectively.

Examples for the hydrated magnesium silicates are selected from the group consisting of natural hydrated magnesium silicates (e.g. natricite ($Mg_2SiO_4\ 2H_2O$), serpentine ($Mg_3Si_2O_7\ 2H_2O$), gymnite ($Mg_4SiO_3\ nH_2O$), aphrodite $Mg_4Si_4O_{12}\ 3H_2O$), steatite ($Mg_3Si_4O_{12}\ H_2O$, talc or soapstone) and sepiolite ($Mg_4Si_6O_{15}(OH)_2 \cdot 6H_2O$)) or synthetic hydrated (or hydrous) magnesium silicates, e.g. of the formula $mMgO\ SiO_2\ nH_2O$, where m is 0.5-2.0 and n is 1-7.

These hydrated magnesium silicate may be used in unmodified form as a first group.

A second group of hydrated magnesium silicates suitable for the invention are as described for the above first group, but have their particle surface hydroxyls modified with silane groups, i.e.

Bulk-O-Si($OR^1$)($OR^2$)-$R^3$

wherein "Bulk" means the bulk of the particle; $R^1$ and $R^2$, which may be equal or different (preferably equal), are organic residues selected from the group consisting of linear or branched $C_{1-10}$ alkyls, $C_{3-6}$ cycloalkyls, $C_{6-10}$ aryls optionally substituted with 1 to 3 residues selected from linear or branched $C_{1-10}$ alkyls, - $[(CH_2CH_2)O]_mR^4$ (wherein m is an integer in the range of 1 to 3 and $R_4$ is selected from the same residues as $R^1$ and $R^2$ and preferably is methyl or ethyl); and more preferably $R^1$ and $R^2$ are selected from the group consisting of methyl and ethyl; and most preferably $R^1$ and $R^2$ are either both methyl or are both ethyl; and $R^3$ is selected from the group consisting of linear or branched $C_{1-20}$ alkyls, $C_{3-6}$ cycloalkyls, $C_{6-10}$ aryls optionally substituted with 1 to 3 residues selected from linear or branched $C_{1-10}$ alkyls, -$[(CH_2CH_2)$

$O]_mR^4$ (wherein m is an integer in the range of 1 to 10 and $R_4$ is selected from the same residues as $R^1$ and $R^2$ and preferably is methyl or ethyl.

All these silane-modified hydrated magnesium silicates are customarily obtainable by grounding the hydrated magnesium silicate to an appropriate particle size and reacting the particle surface hydroxyls with a silane of the formula

$$XO\text{-}Si(OR^1)(OR^2)\text{-}R^3$$

wherein $R^1$, $R^2$ and $R^3$ are as defined above and X is hydrogen or anyone of the groups specified for $R^1$ and $R^2$ (preferably X is hydrogen or is identical to $R^1$ or $R^2$). Depending on whether X is hydrogen or one of the other residues the reaction may form further hydration water (X = hydrogen) or may not form further hydration water water (X = other than hydrogen).

A third group of hydrated magnesium silicates suitable for the invention are as described for the above first group, but have their particle surface hydroxyls modified with (poly)siloxane groups, i.e.

$$Bulk\text{-}[O\text{-}Si(R^1)(R^2)]_m\text{-}R^3$$

wherein Bulk, $R^1$, $R^2$ and $R^3$ are as defined above for the second group and m, when construed to the individual group, is an integer typically in the range of 1 to 10 and when construed to the totality of all such groups is a number average mean, thus a positive real number, in the range of 1.0 to 10.0. Their preparation is analogous to the silane-modified hydrated magnesium silicates, using a polysiloxane of the formula $X\text{-}[O\text{-}Si(R^1)(R^2)]_m\text{-}R^3$, wherein all symbols are as defined above.

The hydrated magnesium silicate most preferred for the invention is sepiolite with surface silanization as described above for the second group.

The particulate hydrated magnesium silicate flame retardant, if present, is typically present in the inventive plastisol in a total amount of 2 to 8 phr, preferably 2 to 5 phr and most preferably about 3 phr.

The hydrated magnesium silicates are "particulate" which for the purposes of the invention means that it preferably has at the most 5% by weight, more preferably at the most 3% by weight, of particles of 45 $\mu$m size or more, as determined by dry screen sieving residue.

The $Al(OH)_3$ flame retardant, if present in the inventive plastisol, is preferably used in an amount of 30 to 50 phr.

The $Al(OH)_3$ is "particulate" which for the purposes of the invention means that it is ground, milled or micronized to a particle size distribution, as determined by laser diffraction (e.g. Cilas 1190 laser particle analyzer), with the following percentiles: $d_{10}$, 3-6 $\mu$m; $d_{50}$ 15-25 $\mu$m ; and $d_{90}$ 30-60 $\mu$m.

Examples for the hydrated zinc borate flame retardant are selected from the group consisting of $2ZnO\cdot3B_2O_3\cdot3H_2O$, $2ZnO\cdot3B_2O_3\cdot3.5H_2O$ , $4\,ZnO\cdot B_2O_3\cdot H_2O$, $3ZnO\cdot3B_2O_3\cdot5H_2O$ and $2ZnO\cdot3B_2O_3\cdot7H_2O$), wherein $2ZnO \times 3B_2O_3 \times 3.5H_2O$ is preferred. If used in the inventive plastisol, the hydrated zinc borates are preferably present in a total amount of 10 to 20 phr.

The hydrated zinc borate is "particulate" which for the purposes of the invention means that it is ground, milled or micronized to a particle size distribution, as determined by laser diffraction (e.g. Cilas 1190 laser particle analyzer), with the following cumulative percentiles: $d_{10} \leq 0.7$ $\mu$m ; $d_{50} \leq 3$ $\mu$m; and $d_{99} \leq 10$ $\mu$m.

The particulate zeolite for the inventive PVC plastisol typically has the chemical composition (excluding absorption water) of $xK_2O \cdot (1\text{-}x)Na_2O \cdot Al_2O_3 \cdot 2SiO_2\ 9/2\ H_2O$, wherein x is a dimensionless number in the range of 0 to 0.7 and preferably in the range of 0 to 0.05. It is typically crystalline and is typically ground or micronized and sieved to a maximum particle size of typically 0.01 to 0.1 mm using sieves of appropriate mesh size. The zeolite preferably is of the A type. The above preferred zeolites is also customarily called "molecular sieve of 4Å pore size".

The zeolite is "particulate" which for the purposes of the invention means that it preferably has at the most 0.1% by weight, more preferably at the most 0.01% by weight, of particles of more than 42 $\mu$m size, as determined by wet screen sieving residue. The particulate zeolite is "dehydrated" which for the purposes of the invention means that it has a residual water content, determined as weight loss upon firing at 950°C, of at the most 3.5 wt%, based on the particulate zeolite before firing. The particulate zeolite may optionally be activated before use in the inventive plastisols; however in an alternate embodiment the particulate zeolite is not activated before use therein.

The plasticizer for the inventive PVC plastisol is conventional and may be itself flame-retardant or not. It may be one or more of the following compound groups:

i) Flame-retardant triaryloxy phosphates of the formula (I):

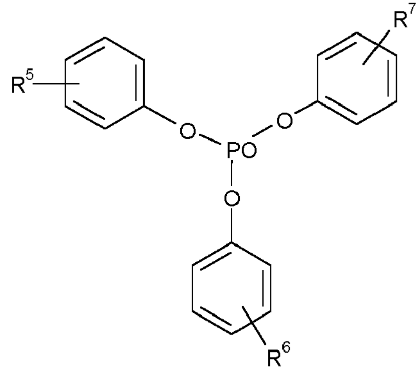

(I)

wherein $R^5$, $R^6$ and $R^7$ may be the same or different (preferably the same) and are each selected from the group of hydrogen and straight-chain or branched $C_{1-10}$, preferably $C_{1-4}$ alkyls; and more preferably $R^5$, $R^6$ and $R^7$ are identical and are methyl, ethyl or isopropyl, or one of these is tert-butyl and the other ones are hydrogen; and each of $R^5$, $R^6$ and $R^7$ is preferably in the para position with respect to the PO group. These plasticizers are flame-retardant by themselves. The plastisol of the invention may also comprise two or more different triaryloxy phosphates of above formula (I).

ii) not flame-retardant linear or branched $C_6$-$C_{13}$alkyl esters of mono-, di- and tri-basic acids, in particular of phthalic, adipic, sebacic, azelaic, citric and trimellitic acids; chlorohydrocarbons. Representative such not flame-retardant plasticizer subgroups include:

Di-($C_6$-$C_{13}$alkyl)phthalates (such as di(2-ethylhexyl)phthalate, n-octyl-n-decyl phthalate, di(n-tridecyl)phthalate, di(isononyl)phthalate, di(isooctyl)phthalate, di(isodecyl)phthalate, di(n-hexyl)phthalate, butyl octyl phthlate, di(capryl)phthalate, di(n-undecyl)phthalate, di(n-octyl)phthalate, di(n-decyl)phthalate, diisodecyl phthalate or 2-ethylhexyl isodecyl phthalate);
mixed (aryl or ($C_1$-$C_3$alkyl)aryl) / (linear or branched $C_4$-$C_{10}$alkyl) phthalates (such as butylbenzyl phthalate, octyl benzyl phthalate or hexyl benzyl phthalate);
abietic derivatives (such as: hydroabietyl alcohol, methyl abietate and hydrogenated methyl abietate);
acetic acid derivatives (such as cumylphenylacetate);
linear or branched $C_4$-$C_{10}$alkyl adipic acid esters (such as dibutyl adipate, diisobutyl adipate, di-octyladipate, di-2-ethylhexyl adipate, diisononyl adipate, diisooctyl adipate, dinonyl adipate, dicapryl adipate, octyl decyl adipate didecyl adipate or diisodecyl adipate);
azelaic acid derivatives (such as dicyclohexyl azelate, di-2-ethylhexyl azelate, di-n-hexyl azelate, diisooctyl azelate and diisodecyl adipate); and
di-($C_6$-$C_{13}$alkyl) mellitic acid esters (such as n-octyl, n-decyl trimellitate, tri-n-octyl-n-decyl trimellitate, triisononyl trimellitate, triisooctyl trimellitate, tricapryltrimellitate.

The flame retardant plasticizers of above i) (formula (I)) and/or the not-flame-retardant plasticizers of above ii), are preferably present in a total amount of 60 to 80 phr, more preferably of 70 to 80 phr. Still more preferably the plasticizers are only those of above i), and in the indicated total amounts.

Suitable co-plasticizers for the plastisol of the invention are:

iii) Fatty acid triglycerides comprising unsaturated fatty acid residues, wherein the fatty acid double bonds are at least in part epoxidized. Examples for the unsaturated fatty acid triglycerides are canola oil, sesame oil, linseed oil, hemp oil, sunflower oil and vegetable oils, such as in particular soybean oil; the latter being preferred. The degree of epoxidation (mole percent of epoxidized double bonds with respect to the total of double bonds), DOE, may be obtained from an epoxidized sample with 300MHz (or preferably 400MHz) $^1H$ NMR intensity measurements in $CDCl_3$ and TMS as internal standard and is calculated therefrom by the formula

$$DOE = \frac{\left(\frac{I_2}{I_3} - \frac{1}{4}\right)}{\left(\frac{I_1}{I_3} + \frac{I_2}{I_3}\right) - \frac{1}{2}} \times 100$$

wherein

$I_1$ is the integrated intensity of the (olefin protons+glyceryl methine proton) signal at $\delta$=5.0-5.8 ppm;
$I_2$ is the integrated intensity of the (epoxide protons) signal at $\delta$=2.7-3.3 ppm;
and
$I_3$ is the integrated intensity of the (glyceryl methylene protons) signal at $\delta$=3.8-4.5 ppm.

For the purposes of the invention this DOE is typically in the range of 80% to 100%, preferably of 90% to 100%, more preferably of 95% to 99%.

The at least partially epoxidized fatty acid triglycerides of above iii), if present, are preferably used in a total amount of 1 to 6 phr, more preferably of 2 to 5 phr.

iv) Fatty acid esters of the formula $R^8$-CO-O-$R^9$ wherein

$R^8$ is a saturated or unsaturated, linear or branched $C_{5-21}$ alkyl radical, preferably $C_{6-17}$ alkyl radical and more preferably $C_{8-14}$ alkyl radical, most preferably being selected from the group consisting of caproic acid, oenanthic acid, caprylic acid, pelargonic acid, capric acid, lauric acid, myristic acid, fish oil fatty acid, palmitic acid, pelagonic acid, margaric acid, stearic acid, isostearic acid, arachic acid, behenic acid, lignoceric acid, cerotic acid, undecylenic acid, oleic acid, elaidic acid, vaccenic acid, icosenic acid, rapeseed oil fatty acid, cetoleic acid, erucic acid, nervonic acid, linoleic acid, linolenic acid, arachidonic acid, timnodonic acid, clupanodonic acid, cervonic acid and a mixture of two or more of these; and
$R^9$ is a Guerbet alcohol (i.e. a 2-alkyl-alkan-1-ol obtainable by the Guerbet reaction), preferably of $C_{6-12}$ total carbon chain length, more preferably selected from the group consisting of 2-methyl-pentan-1-ol, 2-ethyl-pentan-1-ol, 2-propyl-pentan-1-ol, 2-methyl-hexan-1-ol, 2-butyl-hexan-1-ol, 2-propyl-hexan-1-ol, 2-isopropyl-hexan-1-ol, 2-methyl-heptan-1-ol, 2-ethyl-hexan-1-ol, 2-ethyl-heptan-1-ol, 2-propyl-heptan-1-ol, 2-isopropyl-heptan-1-ol, 2-butyl-heptan-1-ol, 2-isobutyl-heptan-1-ol, 2-pentyl-heptan-1-ol and a mixture of two or more of these.

The total amount of the co-plasticizers of above iv), if present, is preferably in the range of 0.5 to 3 phr, more preferably 0.5 to 2 phr.

The plastisol of the invention may comprise further optional components, such as

a) PVC heat stabilizers according to the following subgroups:

a1) Reaction products of triphenyl phosphite with fatty alcohols, being represented by the formula (II):

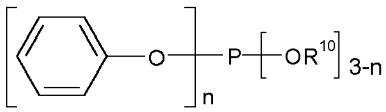

(II)

wherein n is an integer in the range of 1] to 2 and $R^{10}$ is a linear or branched $C_{6-11}$ saturated alkyl residue preferably selected from the group consisting of hex-1-yl, 2-, 3- and 4-methyl-pent-1-yl, 2- and 3-ethyl-but-1-yl, hept-1-yl, 2-, 3-, 4- and 5-methyl-hex-1-yl, 2-, 3- and 4-ethyl-pent-1-yl, oct-1-yl, 2-, 3-, 4-, 5- and 6-methyl-hept-1-yl, 2-, 3-, 4- and 5-ethyl-hex-1-yl, 2-, 3-, 4-, 5-, 6- and 7-methyl-oct-1-yl, 2-, 3-, 4-, 5- and 6-ethyl-hept-1-yl, 2-, 3-, 4-, 5-, 6-, 7- and 8-methyl-non-1-yl, 2-, 3-, 4-, 5-, 6- and 7-ethyl-oct-1-yl, 2-, 3-, 4-, 5-, 6-, 7-, 8- and 9-methyl-dec-1-yl, 2-, 3-, 4-, 5-, 6-, 7- and 8-ethyl-non-1-yl and mixtures of two or more of these.
a2) Divalent metal salts of carboxylic acids.

Therein the divalent metal salts are preferably from earth alkaline metals (in particular magnesium, calcium and barium, more preferably barium) and/or from group 2B metals (in particular zinc and cadmium, more preferably zinc). The metals are preferably provided in combinations such as barium-cadmium, barium-zinc or calcium-zinc, with barium-zinc being preferred. The carboxylic acids are typically selected from the group consisting of acetic acid, propionic acid, hexanoic acid, heptanoic acid, caprylic acid, ethyl hexanoic acid, decanoic acid, oleic acid, lauric acid, palmitic acid, myristic acid, ricinoleic acid, naphthenic acids, stearic acid, optionally alkyl-substituted benzoic acid, phthalic acid and mixtures of two or more of these.

The salts of divalent metals with carboxylic acids may optionally and preferably be further admixed with one or two carbonates of the divalent metals involved ("overbased").

The salts of divalent metals may additionally but preferably be admixed with tautomeric chelating ligands of the general formula (III):

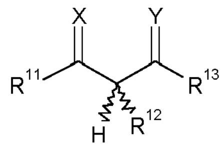

(III)

wherein

X and Y are selected from O and $NR^{14}$, provided that at least one of X and Y (preferably X) is O, and more preferably both are O;$R^{11}$ and $R^{13}$ independent of each other are selected from the group consisting of linear or branched $C_{1-20}$ alkyl or alkenyl, linear or branched $C_{1-20}$ alkoxyl, $C_{7-20}$ aralkyl, $C_{6-20}$ aryl (in particular phenyl) and optionally unsaturated $C_{6-20}$ cycloalkyl, these residues optionally being unsubstituted or substituted by one or more halogen atoms (in particular Cl), hydroxyls, $C_{1-4}$ alkyls and/or $C_{1-4}$ alkoxyls; with preferably both $R^{11}$ and $R^{13}$ being phenyl; and $R^{12}$ is selected from hydrogen and the residues defined for $R^{11}$ and $R^{13}$; or one of $R^{11}$ and $R^{13}$ (preferably $R^{13}$) is as previously defined and the other one (preferably $R^{11}$) together with $R^{12}$ and the carbon atoms to which they are bound form a 5- to 7-membered carbocyclic ring which may contain a nitrogen atom substituted by hydrogen or $R^{14}$ and/or which may be substituted at the ring carbon atoms by one or two $R^{14}$; and $R^{14}$ is selected from the group consisting of hydrogen, linear or branched $C_{1-10}$ alkyl or alkenyl, $C_{7-20}$ aralkyl, $C_{6-20}$ aryl and optionally unsaturated $C_{6-20}$ cycloalkyl.The salts of divalent metals with carboxylic acids may optionally and preferably also be further admixed with a hydrotalcite of the general formula

$$(Mg^{2+})_{(1-x)}(Al^{3+})_x(OH^-)2(A^{n-})_{(x/n)} \cdot mH_2O$$

wherein $0 < x \leq 0.5$ and more preferably is 0.25 or 1/3; $A^{n-}$ is either selected from the group consisting of $OH^-$, $NO_3^-$, F-, $Cl^-$ and Br (thus n = 1) or is selected from the group consisting of $CO_3^{-2}$ , $SO_4^{2-}$ and $HPO_4^{2-}$ (thus n = 2) and preferably is $CO_3^2$; and m is a positive number. The most preferable salt of divalent metal with carboxylic acids for admixing with such hydrotalcite is zinc dibenzoate.

The total amount of the heat stabilizers for the PVC, if present, is preferably chosen such that a Congo Red test according to ISO 182 on the cured plastisol takes at least 130 min until the Congo Red indicates pH 3.0 or less. Alternatively the total amount of the heat stabilizers, if present, is preferably in the range of about 0.01 to 10 phr, preferably about 0.5 to 5 phr.

b) Dyes, pigments and antistatic fillers such as carbon black, in a total amount of typically 0.1 to 2% phr.

The inventive PVC plastisol can be used in any conveyor or power transmission belt application where a customary, optionally already flame retardant PVC plastisol has been used.

The inventive PVC plastisol may be firstly used in any conventional conveyor belt or power transmission belt where a PVC-containing top layer, that is, acting as the conveying layer facing away from the pulleys, is present. Examples of such conventional PVC top layer-containing belts are the flame-resistant light conveyor belts marketed by the applicant at the time of filing this application under the codes NAB-10ESBV 13, NAD-10ESBV 13, NAJ-10ESBV 13, NAQ-8ESBV, NAW-02SSBV, NAW-8ESBV, NHB-10ESBV 13, NHE-8ESBV, NHM-10ELBV-E3L2, NHM-10ESBV 13, NHM-7ESBV, NHM-8ESBV 13, NHZ-10ESBV-O1, NHZ-8ESBV-O1, NHZ-8ESBV-O1E3, NMB-10ESBV, NNT-10ELW-E6, NNT-10ESBU 13, NNT-28ESBE-E2, NNT-8ESBU, NSD-10ESBV, NSL-02SSBV, NSL-10ESBV 13 and NSL-11ESBV 13.

The invention thus also provides a first process of manufacturing a conveyor belt or power transmission belt with a PVC-containing top layer, comprising the steps of i) providing a belt carcass having a carcass top surface; ii) providing a PVC plastisol as disclosed or claimed herein; iii) applying the PVC plastisol onto the belt's carcass top surface; and iv) curing the PVC plastisol to form a PVC-containing cover layer. The belt with the PVC-containing top layer so obtained or so obtainable also forms part of the invention. It comprises, as an essential structural feature, a belt carcass and cover layer on the carcass, wherein the cover layer comprises a PVC, one of a) particulate hydrated magnesium silicate, b) particulate $Al(OH)_3$ and/or c) particulate hydrated zinc borate, and a particulate dehydrated zeolite.

For this first exemplary embodiment the belt carcass as such is conventional. It typically contains one or more traction layers (such as two, three or four), wherein each of the traction layers comprises, or consists, of a woven or nonwoven textile.

If the textile(s) in the traction layer(s) is(are) a woven fabric then examples for the weave of such woven textile are plain or twill (such as herringbone twill, cross twill), 2/2 warp rib, 2/2 weft rib or 2/2 basket weaves. For textiles in the form of woven fabrics the wefts may be either monofilaments or multifilaments. Preferably they are spun multifilaments The warps are preferably multifilaments, more preferably spun multifilaments. The material(s) for the textile(s) is(are) preferably selected from the group consisting of aramid, polyamide (in particular nylon), polyester (in particular PET), natural fibres and a mixture of these. The natural fibre, if present, is preferably selected from the group consisting of jute, hemp, ramie, sisal, wool and cotton; wherein cotton is preferred. Most preferred for all textiles is a polyester, in particular PET.

Alternatively the textile(s) in the traction layer(s) may be non-woven fabric(s), optionally reinforced with longitudinally running reinforcing filaments. The non-woven fabric(s) may be firstly made up of inorganic fibres, such as glass,

basalt, carbon or aramid. They may secondly be made up or synthetic organic fibres, such as of polyester (such as PET or PBT), polyolefinic fibres (such as polypropylene or or polyethylene), polyamides (such as nylon-6,6), viscose, polyphenylene sulfone or are bicomponent fibres having a higher-melting type of fibres and a lower-melting type of fibres, or core-sheath fibres having a higher-melting core and a lower-melting sheath. The use or co-use of bicomponent fibres, such as in an amount of 50 to 100% by weight based on the total weight of fibres of the non-woven, may improve the tear resistance and elongation resistance (tenacity) of the non-woven and thus the tear resistance and elongation resistance (tenacity). The non-woven fabric(s) may also be made up or natural organic fibres, such as wool, cotton, hemp, ramie, jute, sisal or flax. In any of the non-woven textiles the orientation of the fibres can be predominantly oriented in one direction (typically the conveying direction of the belt) by carding before impregnation.

The belt of this first exemplary embodiment may also contain a combination of one or more traction layer(s) with woven textile(s) and of one or more traction layer(s) with non-woven textile(s).

For this first exemplary embodiment the inventive PVC plastisol may be spread onto the prefabricated belt carcass and the PVC coating so applied is cured as described above.

Fig. 1 shows a conveyor belt 1 according to this first exemplary embodiment. The belt comprises a belt carcass 2 with only one traction layer which as such is conventional. It may comprise a woven fabric 22 impregnated with a thermoplastic or thermoplastic elastomer 23. This in turn may also be a PVC (whether from a conventional or an inventive PVC plastisol) or a polymethyl methacrylate, optionally modified with polyurethane. There might also be a PVC non-compatible impregnating polymer 23, in which case an adhesive layer (not shown in the figure), such as of polyurethane, might be used between top layer 3 and belt carcass 2. The belt carcass 2 furthermore comprises an abrasion-resistant bottom layer 24 such as of a TPU, for contacting the pulleys. The conveyor belt also comprises a top layer 3 made of an inventive PVC plastisol.

The inventive plastisols may be secondly used impregnate fabric layers to form the belt carcass itself, which is then overcoated with other thermoplastics, thermoplastic elastomers (such as TPU's) or crosslinked polymers to form the final belt. One example of belts of this type are the so-called "PVG belts" (from PVC and the German "Gummi" for rubber). The German standard DIN 22109-1 (1988) defined "PVG-Fördergurt" (= PVG conveyor belt) as "consisting of a carcass impregnated with PVC and of cover plates of rubber".

The invention thus also provides a second process of manufacturing such a belt with a PVC-impregnated textile layer, comprising the steps of i) providing a textile; ii) providing a PVC plastisol as disclosed or claimed herein; iii) impregnating the textile with the PVC plastisol; iv) curing the PVC plastisol to form the traction layer containing the textile with an impregnation comprising PVC and having a having a first traction layer top surface and a second traction layer top surface; and v) applying onto the first textile top surface a first rubber coating layer and onto the second textile top surface a second rubber coating layer. The belt so obtained or so obtainable also forms part of the invention. It comprises, as an essential structural feature, one traction layer comprising a textile and an impregnation for the textile, wherein the impregnation comprises a PVC, one of a) particulate hydrated magnesium silicate, b) particulate $Al(OH)_3$ and/or c) particulate hydrated zinc borate, and a particulate dehydrated zeolite.

The textiles that can be used in the traction layer are as described above for the first exemplary embodiment.

Exemplary methods of impregnating the textile by the inventive PVC plastisol are by spraying, spread-coating, dipping, kiss-coating or by doctor blade. Preferred is the application of the PVC plastisol, particularly if it is of high-viscosity, by spread coating.

In order to improve adhesion of the PVC to the textile upon curing of the plastisol it is preferred that furthermore a crosslinking agent is added to the PVC plastisol. The crosslinking agent is reactive to both the chlorine atoms covalently bound to the PVC and to the material of the fibres of the textile. If the material of the fibres is a polyester such as PET, as is preferred, then the crosslinking agent is typically also reactive to the ester groups contained therein.

Examples of such dual PVC/polyester reactive crosslinkers are:

- Di- or polyamines. These are preferably selected from compounds having the formula $H_2N\{[(CH_2)_x]NH\}_y(CH_2)_zNH_2$ wherein x is an integer number from 2 to 6, preferably 2 to 3; y is an integer number from 0 to 3; and z is an integer number from 2 to 6, preferably 2 to 3.
- Di- or polyols. These are preferably linear or branched $C_2$-$C_4$alkyls having 2 to 4 hydroxy groups, provided that each carbon at the most has one hydroxy attached thereto; or polyalkylene glycols having 2 terminal hydroxy groups, wherein the alkylene is preferably 1,2-ethylidene, 1,3- and/or 1,2-propylidene.
- monomeric or polymeric dithiols. These have preferably the formula $HS\{[(CH_2)_o]S\}_p(CH_2)_qSH$ wherein o is an integer from 2 to 6, preferably 2 to 4; p is an integer from 0 to 10, preferably 0 to 4; and q is an integer from 2 to 6, preferably 2 to 3.
- Diisocyanates and triisocyanates. Diisocyanates are preferably selected from the group consisting of butylene-1,4-diisocyanate, hexamethylene-1,6-diisocyanate, dicyclohexylmethane-4,4'-diisocyanate, tolylene-2,4-diisocyanate, tolylene-2,6-diisocyanate, diphenylmethane-2,4'-diisocyanate, diphenylmethane-4,4'-diisocyanate, 3-methyldiphenylmethane-4,4'-diisocyanate, m- and p-phenylene diisocyanate, chlorophenylene-2,4-diisocyanate, naphthalene-1,5-disocyanate, diphenyl-4,4-diisocyanate, 4,4-diisocyanato-3,3-dimethyldiphenyl, 4:4-diisocyanato-3,3- dimethoxydiphenyl, diphenyl ether 4,4-diisocyanate, meta-tetramethylxylylene diisocyanate, trans-cyclohexane diisocyanate, isophorone diisocyanate and diphenylether-2,4,4-triisocyanate. Triisocyanates are preferably selected from the group consisting of 2,4,6-triisocyanato-toluene, 2,4,4'-triisocyanatodiphenylether and triphenylmethane 4,4',4"-triisocyanate. Diisocyanates and triisocyanates may be hydrolysed in part by trace water to form amides and/or carboxylic acids which then react with the chlorine from the PVC and the ester groups in the polyester.

The PVC impregnated textile (in particular wherein the textile is a woven fabric) is then overcoated both sides thereof with top layers of rubber to form the PVG belt. These overcoating steps and the rubbers used as the top layers as such are conventional.

Preferably the rubber in the top layers is vulcanized. The preferred rubber is acrylonitrile-butadiene rubber (commonly abbreviated as "NBR"). The NBR can be applied either in solid grades, such as with sufficiently high molecular weight and/or in pre-crosslinked form. Pre-crosslinking may be done on the one hand with sulfur and/or sulfur-containing vulcanization agents, on the other hand it may be done by directly co-polymerizing crosslinking comonomers such as divinylbenzene. The NBR may also be employed as so-called "liquid NBR", wherein the molecular weight is sufficiently low and the degree of crosslinking is sufficiently low such as to impart the NBR a Brookfield viscosity not exceeding typically 30000 mPa.s at 25°C.

As the overall belt of this second exemplary embodiment is preferably flame retardant the rubber(s), such as NBR, may themselves also contain customary flame-retardants. A commonly used flame retardant for such rubbers are chlorinated paraffins, such as those formerly marketed by Hercules Powder Company under the trade name Clorafin™.

After application or together with the application, whether by calendering or hot pressing, the rubber, such as NBR is fully cured, crosslinked and adhered to the PVC and textile-containing traction layer.

The top layers of the belts of this second exemplary embodiment may also contain blends or alloys of PVC and NBR, e.g. having been produced under heating and high shear and/or pressure and been designated in the art as "flux blends", "fluxed blends" or "prefluxed blends".

A cross-section of an exemplary belt of this second exemplary embodiment is shown in Fig.2. This is a typical PVG belt 4 with a woven fabric 51 impregnated with a PVC (obtained from an inventive PVC plastisol) and with two NBR top layers 55,56.

The invention also provides a third process of manufacturing a conveyor belt or power transmission belt with a PVC-containing belt carcass, comprising the steps of i) providing two or more textiles; ii) impregnating each of the textiles with a PVC plastisol as disclosed or claimed herein; iii) curing each of the PVC plastisols to form traction layers each containing the textile with an impregnation comprising PVC; iv) calendering or laminating the traction layers together, optionally with co-use of further PVC layers between adjacent traction layers, to obtain a belt carcass with a first top surface and a second top surface, and v) optionally calendering or laminating a first top cover layer to the first top surface and/or a second top cover layer to the second top surface. The belt so obtained or so obtainable also forms part of the invention. It comprises, as an essential structural feature, two or more traction layers each comprising a textile and an impregnation, wherein the impregnations comprise a PVC, one of a) particulate hydrated magnesium silicate, b) particulate $Al(OH)_3$ and/or c) particulate hydrated zinc borate, and a particulate dehydrated zeolite.

For this third exemplary embodiment the two or more traction layers each comprise a woven or nonwoven textile as exemplified above for the first exemplary embodiment. Each of the textiles in the traction layers is preferably a woven fabric.

For this third exemplary embodiment the inventive PVC plastisols may be impregnated into the textiles, and the curing thereof may be performed, as described above for the second exemplary embodiment. The PVC plastisol may again contain a bonding agent for the PVC and the fabric as also described above for the second exemplary embodiment.

Fig.3 shows a two-traction layer conveyor belt 6 according to this third exemplary embodiment. It comprises a belt carcass 7 mainly constructed of two traction layers 71,72 and an intermediate layer 73. The first traction layer 71 contains a first woven fabric 711 with an impregnation 712 obtained from a first inventive PVC plastisol. Analogously the second traction layer 72 contains a second woven fabric 721 with an impregnation 722 obtained from a second inventive PVC plastisol. First, 711, and second, 721, woven fabrics may be of different or same construction. Preferably the plastisols used to obtain first, 712, and second, 722, impregnations are identical. The intermediate layer 73 comprises, or consists of, an intermediate PVC or another thermoplastic or thermoplastic elastomer compatible with the first, 712, and second, 722, impregnations, as exemplified above for the first exemplary embodiment. The intermediate PVC may preferably be the same as present in the plastisols used to obtain the first, 712, and/or second, 722 impregnation. The belt also comprises a first top layer 76 adhering to a first top surface 74 of the belt carcass and a second top layer 77 adhering to a second top surface 75 of the belt carcass. The first (typically conveying) top layer 76 may be tailored to suit the respective required properties, such as abrasion resistance, oil resistance, bacterial/fungal resistance and/or chemical resistance. The second (typically pulley-facing) top layer 77 may provide improved abrasion resistance for resisting abrasion with the pulleys. These top layers, which as such might be incompatible with the PVC contained in the respective traction layers,

may optionally be adhered to these respective traction layers using a crosslinking, typically polyurethane-containing adhesive (not shown in the figure).

EXAMPLES

Example 1: $Sb_2O_3$-devoid plastisol according to the invention

The plastisol had the following composition::

| Component number | Trade name | chemical description | function | amount (kg) |
|---|---|---|---|---|
| 1 | Lacovyl ® PA1384 | PVC (vinyl chloride+ 4 mol% vinyl acetate copolymer) | thermoplastic coating, essential component 1 | 100 |
| 2 | Adins Clay 80T | particulate sepiolite, surface-silanized | flame retardant, essential component 2 | 3 |
| 3 | Sylosiv A4 | particulate zeolite, molecular sieve 4Å | bubbling preventer, essential component 3 | 1 |
| 4 | Roflex T45 | triaryl phosphate of formula (I) | plastisol plasticizer, essential component 4 | 35 |
| 5 | Roflex T70L | triaryl phosphate of formula (I) | plastisol plasticizer, essential component 4 | 45 |
| 6 | Wepox 1 | epoxidized soybean oil | co-plasticizer | 3 |
| 7 | Edenol® 311 | Fatty acid ester of formula $R^8$-CO-O-$R^9$ | co-plasticizer | 1 |
| 8 | Akcrostab™ LZB6148 | phosphite of formula (II) | heat stabilizer | 5 |
| 9 | Martinal® ON 320 | $Al(OH)_3$ | additional flame retardant | 37.5 |
| 10 | | hydrated zinc borate | additional flame retardant | 12.5 |
| 11 | | carbon black | pigment, antistatic additive | 4.8 |

Example 2 reference formulation

A reference formulation with the following composition was prepared: :

| Component number (corresponding to component numbers of inventive formulation of Example 1) | Trade name | chemical description | function | amount (kg) |
|---|---|---|---|---|
| 1 | | PVC | thermoplastic coating | 100 |
| 2 | Adins Clay 80T | particulate sepiolite, surface-silanized | flame retardant | 5 |
| 3/4 | | triaryl phosphate of formula (I), with $R^5$ = $R^6$ = $R^7$ = p-isopropyl | plastisol plasticizer | 75 |
| 6 | | epoxidized soybean oil | co-plasticizer | 3 |
| 8 | | fatty acid salts of barium/-zinc | heat stabilizer | 5 |

(continued)

| Component number (corresponding to component numbers of inventive formulation of Example 1) | Trade name | chemical description | function | amount (kg) |
| --- | --- | --- | --- | --- |
| 9 | | $Al(OH)_3$ | additional flame retardant | 15.0 |

Example 3 Limiting Oxygen Index (LOI) determinations according to norm ISO 4589-2: 2008 for inventive and reference PVC plastisols

The plastisols from examples 1 and 2 were coated onto silicone-modified cardboard leaflets of 0.2 mm thickness, using a rubber blanket knife spaced apart from the cardboard by 1 mm. The PVC plastisol coatings were cured in a laboratory oven by W. Mathys AG, Switzerland for 4 minutes at 195°C.

The LOI corresponds to the minimum percentual concentration of oxygen with respect to nitrogen (expressed as vol% $O_2/N_2$) that supports the burning of the test sample for at least 180 seconds. Specimens of 12 cm length and 5 cm width were cut of the PVC plastisol coated, heat-cured cardboard samples. The specimens were conditioned before testing for 88 hours at 23°C and 50% relative humidity. They were ignited using "Procedure B - Propagating Ignition" of the norm. The burning behaviour of the ignited film specimens was assessed in the vertically arranged test chimney described in figure 2 of the norm. The "preliminary oxygen concentration" of the norm was obtained with a starting concentration of 27 vol% $O_2$ and increased in steps of 1 vol%. The cured inventive PVC plastisol of example 1 behaved as follows:

| Oxygen conc. (vol%) | 27 | 28 | **29** |
| --- | --- | --- | --- |
| Burning period (s) | 10 | 18 | **>180** |
| Burning test result | 0 | 0 | **X** |

The "preliminary oxygen concentration", the first one at which the burning test failed (X) was thus determined as 29 vol%.

Five more specimens were tested, the first one at that preliminary oxygen concentration and the remaining ones at decreasing oxygen concentrations in steps of 0.2 vol%. The results of these five burning tests was recorded as the $N_L$ series required by the norm:

$N_L$ series table

| Oxygen conc. (vol%) | 29.0 | 28.8 | 28.6 | 28.4 | 28.2 |
| --- | --- | --- | --- | --- | --- |
| Burning period (s) | >180 | >180 | >180 | >180 | 35 |
| Burning test result | X | X | X | X | 0 |

This $N_L$ series result corresponded, based on row b) of the norm's table with the Dixon's "high and low" method for k determination, to column 5 of that table.

Four more specimens were tested at alternating oxygen concentrations of either 28.4 vol% or 28.2 vol%. The rightmost result of the above $N_L$ series together with the results of these four further specimens gave the $N_T$ series required by the norm:

$N_T$ series table

| Oxygen | 28.2 | 28.4 | 28.2 | 28.4 | 28.2 |
| --- | --- | --- | --- | --- | --- |
| conc. (vol%) | | | | | |
| Burning period (s) | 35 | >180 | 30 | >180 | 40 |
| Burning test result | 0 | X | 0 | X | 0 |

This $N_T$ series result corresponded, based on column 6 of the norm's table with the Dixon's "high and low" method

for k determination, to row 6 of that table. The $c_f$ value required by the norm was obtained as the rightmost oxygen concentration of the $N_T$ series and was thus 28.2 vol%.

From above obtained row 6 and from above obtained column 5 of the norm's table with the Dixon's "high and low" method for k determination the k value of -0.45 was obtained of which the negative (+0.45) was taken because X values instead of 0 values of the $N_L$ series were considered.

The limiting oxygen index LOI was then obtained for the specimens coated with the inventive PVC plastisol from example 1, using the norm's formula and the above values of $c_f$ and k as

$$LOI = 28.2\ vol\% + 0.45 \times 0.2\ vol\% = 28.3\ vol\%.$$

The LOI determination of the specimens coated with the reference PVC plastisol from example 2, done analogously, gave a LOI of 30.7 vol %

<u>Example 4:</u> Coating of PVC plastisols from examples 1 and 2 onto technical textiles

Technical textiles of 0.67 mm thickness, representative for a textile used in a traction layer of a conveyor belt, were used. This textile had weft polyester monofilaments of 0.25 mm diameter and warp filaments of polyester staple fibres of 12/2 Nec (Number English Cotton), thus having two interlaced layers of 6 Nec each. Their weave was a 3/3 twill herringbone weave.

The plastisols from examples 1 and 2 were coated onto the textiles using a laboratory coating unit type "SV" by W. Mathis AG, Oberhasli, Switzerland, however with a spiked support to better hold the textiles, using a rubber blanket knife and cured at for 4 minutes at 195°C. In the case of the reference PVC plastisol from example 2 the formation of air bubbles was observed (see the right part in photograph of Fig.4a, with bubbles under illumination visible), whereas for the inventive PVC plastisol from example 1 no such bubble formation was observed (see photograph of Fig. 4b).

## Claims

1. A PVC plastisol comprising

   a) a PVC,
   b) a plasticizer for the PVC,
   c) a particulate hydrated magnesium silicate, particulate $Al(OH)_3$ and/or particulate hydrated zinc borate, preferably in a total amount of 40 to 60 parts by weight per 100 parts by weight of the PVC;

   **characterized in that** it furthermore comprises d) a particulate dehydrated zeolite.

2. The plastisol as claimed in claim 1, comprising as c) a particulate hydrated magnesium silicate, preferably in an amount of 2 to 8 parts by weight per 100 parts by weight of the PVC, wherein the particulate hydrated magnesium silicate more preferably is a sepiolite.

3. The plastisol as claimed in claim 1 or 2, comprising as c) particulate $Al(OH)_3$, preferably in an amount of 30 to 50 parts by weight based on 100 parts be weight of the PVC.

4. The plastisol as claimed in anyone of claims 1 to 3, comprising as c) hydrated zinc borate, preferably in an amount of amount of 10 to 20 parts by weight based on 100 parts by weight of the PVC.

5. The plastisol as claimed in any one of claims 1 to 4, wherein the plasticizer comprises a compound according to formula (I):

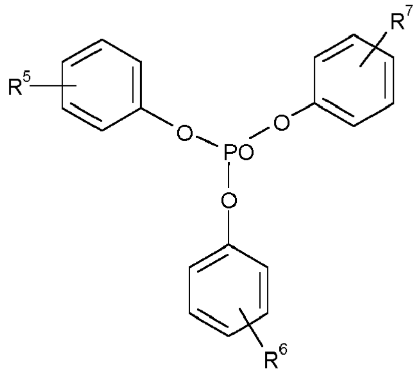

(I)

wherein $R^5$, $R^6$ and $R^7$ may be the same or different and are each selected from the group of hydrogen and straight-chain or branched $C_{1-10}$ alkyls, and the plasticizer is preferably present in a total amount of 60 to 80 parts by weight based on 100 parts by weight of the PVC.

**6.** The plastisol as claimed in any one of the preceding claims, comprising as a co-plasticizer a fatty acid triglyceride comprising unsaturated fatty acid residues, wherein the fatty acid double bonds are at least in part epoxidized, and wherein the at least partially epoxidized fatty acid triglycerides are preferably present in a total amount of 1 to 8 parts by weight based on 100 parts by weight of the PVC.

**7.** The plastisol as claimed in any one of the preceding claims, comprising as a co-plasticizer a fatty acid ester of the formula $R^8$-CO-O-$R^9$ wherein $R^8$ is a saturated or unsaturated, linear or branched $C_{5-21}$ alkyl radical and $R^9$ is a 2-alkyl-alkan-1-ol obtainable by the Guerbet reaction, preferably of $C_{6-12}$ total carbon chain length, and wherein the fatty acid ester co-plasticizer is present in a total amount of 0.5 to 3 parts by weight based on 100 parts by weight of the PVC.

**8.** The plastisol as claimed in any one of the preceding claims, which is free of $Sb_2O_3$.

**9.** A process for preparing a conveyor belt or a power transmission belt (1), comprising the steps of

i) providing a belt carcass (2) with a carcass top surface (21);
ii) providing a PVC plastisol as claimed in anyone of claims 1 to 8;
iiii) applying the PVC plastisol onto the carcass top surface (21); and
iv) curing the PVC plastisol to form a PVC-containing cover layer (3).

**10.** A process of manufacturing a conveyor belt (4), comprising the steps of

i) providing a textile (51);
ii) providing a PVC plastisol as claimed in anyone of claims 1 to 8;
iii) impregnating the textile (51) with the PVC plastisol;
iv) curing the PVC plastisol to form a traction layer (5) containing the textile (51) with an impregnation (52) comprising PVC and having a having a first traction layer top surface (53) and a second traction layer top surface (54); and
v) applying onto the first textile top surface (53) a first rubber coating layer (55) and onto the second textile top surface (54) a second rubber coating layer (56).

**11.** A process of manufacturing a conveyor belt or power transmission belt (6), comprising the steps of

i) providing two or more textiles (711,721);
ii) impregnating each of the textiles (711,721) with a PVC plastisol as claimed in anyone of claims 1 to 8;
iii) curing each of the PVC plastisols to form traction layers (71,72) each containing the textile (711,721) with an impregnation (712,722) comprising PVC;
iv) calendering or laminating the PVC impregnated textiles together, optionally with co-use of further PVC layers between adjacent PVC impregnated textiles, to obtain a belt carcass (7) with a first top surface (74) and a second top surface (75), and
v) optionally calendering or laminating a first top cover layer (76) to the first top surface (74) and/or a second top

cover layer (77) to the second top surface (75).

**12.** A conveyor belt or power transmission belt (1) obtainable by the process of claim 9, or comprising a belt carcass (2) and cover layer (3) on the carcass (2), wherein the cover layer (3) comprises a PVC, one of a) particulate hydrated magnesium silicate, b) particulate $Al(OH)_3$ and/or c) particulate hydrated zinc borate, and a particulate dehydrated zeolite.

**13.** A conveyor belt (4) obtainable by the process of claim 10, or comprising a textile (51) and an impregnation (52) for the textile (51), wherein the impregnation (52) comprises a PVC, one of a) particulate hydrated magnesium silicate, b) particulate $Al(OH)_3$ and/or c) particulate hydrated zinc borate, and a particulate dehydrated zeolite.

**14.** A conveyor belt or power transmission belt (6) obtainable by the process of claim 11, or comprising two or more traction layers (71,72) each comprising a textile (711,721) and an impregnation (712,722), wherein the impregnations (712,722) comprise a PVC, one of a) particulate hydrated magnesium silicate, b) particulate $Al(OH)_3$ and/or c) particulate hydrated zinc borate, and a particulate dehydrated zeolite.

**15.** Use of a PVC plastisol as claimed in any one of claims 1 to 8 in the manufacture of conveyor or power transmission belts comprising a PVC-containing layer.

Fig. 1

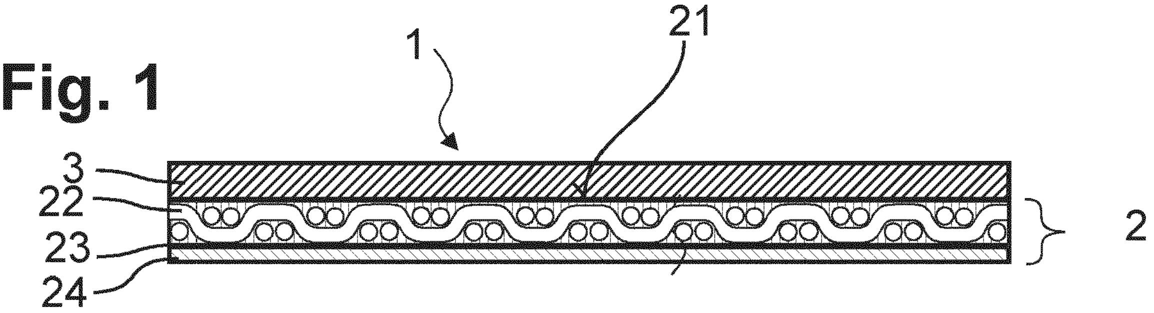


Fig. 2

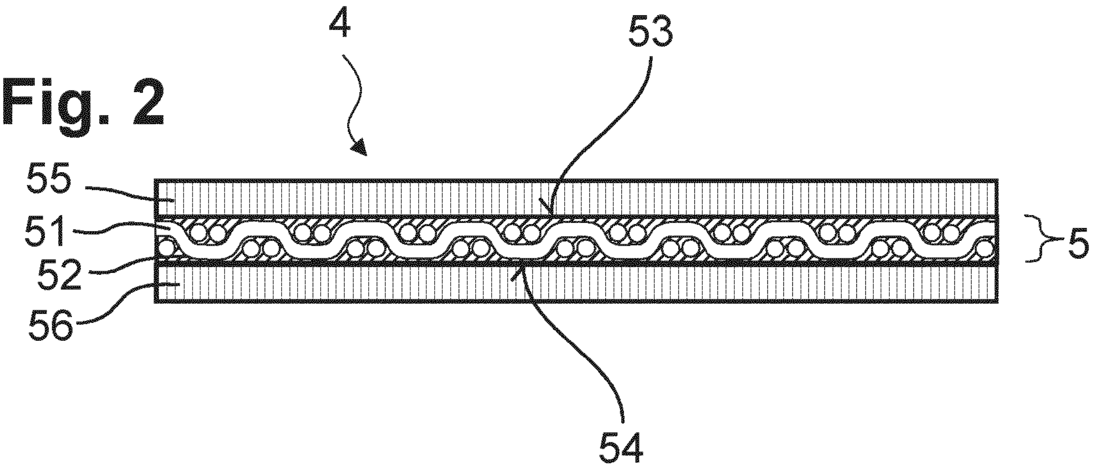


Fig. 3

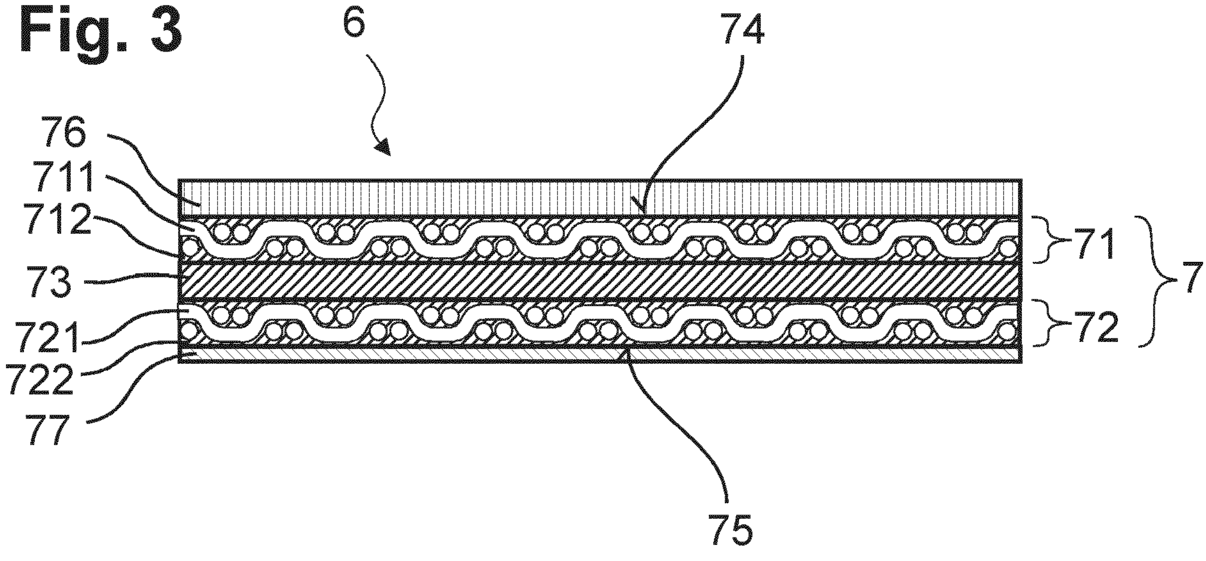

Fig.4

a)

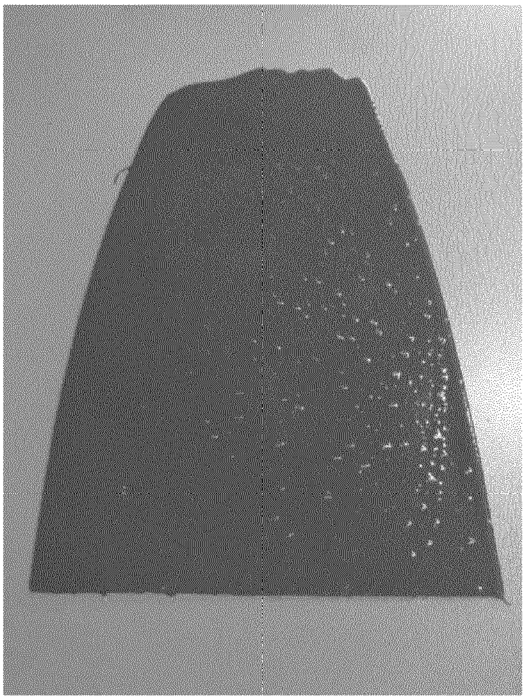

b)

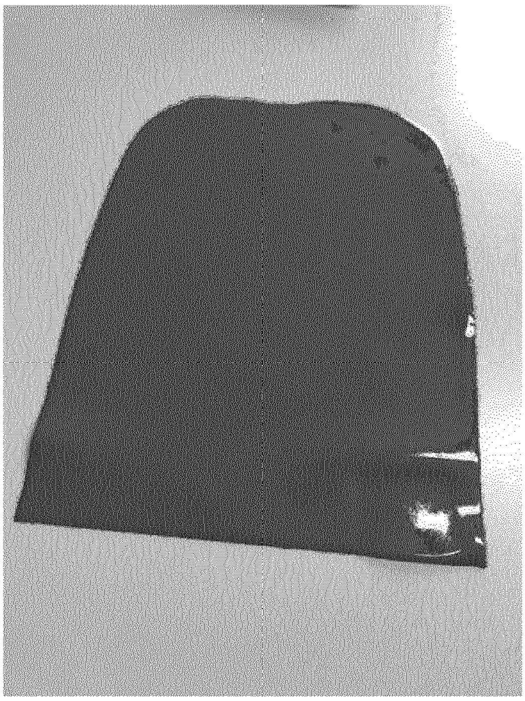

Europäisches Patentamt
European Patent Office
Office européen des brevets

# EUROPEAN SEARCH REPORT

Application Number
EP 24 17 5743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/152352 A1 (BARBER DON GARY [US] ET AL) 17 June 2010 (2010-06-17) | 1-8 | INV. C08K3/34 C08K3/38 C08K5/523 C08K3/22 C08L27/06 B65G15/00 |
| Y | * paragraphs [0028], [0043] - [0054], [0056], [0070] * * examples 2-1 and 2-2 * * claims 1-22 * | 9-15 | |
| X | US 2012/282432 A1 (PAPAZOGLOU ELISABETH SERAFEIM [US] ET AL) 8 November 2012 (2012-11-08) | 1,3,8 | |
| A | * paragraphs [0026] - [0036], [0038] * * tables 2, 3 * * claims 1-14 * | 2,4-7, 9-15 | |
| A | EP 1 203 050 B1 (PQ HOLDING INC [US]) 17 September 2003 (2003-09-17) * example 9 * * claims 1-43 * | 1-15 | |
| Y | CN 102 673 942 A (GANSU XILONG RUBBER CO LTD) 19 September 2012 (2012-09-19) | 9-15 | |
| A | * claims 1-4 * | 1-8 | |

| TECHNICAL FIELDS SEARCHED (IPC) |
|---|
| C08K |
| B65G |

The present search report has been drawn up for all claims

| Place of search | Date of completion of the search | Examiner |
|---|---|---|
| Munich | 12 November 2024 | Neumeier, Michael |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 17 5743

This annex lists the patent family members relating to the patent documents cited in the above-mentioned European search report. The members are as contained in the European Patent Office EDP file on
The European Patent Office is in no way liable for these particulars which are merely given for the purpose of information.

12-11-2024

| Patent document cited in search report | | Publication date | Patent family member(s) | | | Publication date |
|---|---|---|---|---|---|---|
| US 2010152352 | A1 | 17-06-2010 | NONE | | | |
| US 2012282432 | A1 | 08-11-2012 | NONE | | | |
| EP 1203050 | B1 | 17-09-2003 | AT | E250098 | T1 | 15-10-2003 |
| | | | AU | 761211 | B2 | 29-05-2003 |
| | | | BR | 0012820 | A | 07-05-2002 |
| | | | CA | 2379966 | A1 | 08-02-2001 |
| | | | CN | 1365375 | A | 21-08-2002 |
| | | | DE | 60005370 | T2 | 24-06-2004 |
| | | | EP | 1203050 | A1 | 08-05-2002 |
| | | | ES | 2206284 | T3 | 16-05-2004 |
| | | | JP | 3863778 | B2 | 27-12-2006 |
| | | | JP | 4522974 | B2 | 11-08-2010 |
| | | | JP | 2003506512 | A | 18-02-2003 |
| | | | JP | 2006273714 | A | 12-10-2006 |
| | | | MX | PA02001034 | A | 20-08-2002 |
| | | | TW | I251008 | B | 11-03-2006 |
| | | | US | 6096820 | A | 01-08-2000 |
| | | | WO | 0109232 | A1 | 08-02-2001 |
| | | | ZA | 200200118 | B | 26-03-2003 |
| CN 102673942 | A | 19-09-2012 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2010037679 A
- CN 107501638 A
- CN 106939093 A

### Non-patent literature cited in the description

- *AIP Conference Proceedings*, 2023, vol. 2626 (1), https://doi.org/10.1063/5.0136124
- **MARTINA DE PIETRA**. Valutazione della sepiolite nell'additivazione antifiamma del plastisol di PVC. University of Turin, 2021
- *Energy & Fuels*, 2003, vol. 17, 571-576